# EUROPÄISCHE PATENTANMELDUNG

(11) **EP 0 571 360 A1**
(43) Veröffentlichungstag der Anmeldung: **24.11.1993**
(21) Anmeldenummer: 93890104.8
(22) Anmeldetag: 19.05.1993
(51) Int. Cl.: F16B 13/12

(54) **Dübel**

(30) Priorität: 22.05.1992 AT 1071/92
(71) Anmelder: fischerwerke Artur Fischer GmbH & Co. KG, D-72178 Waldachtal (DE)
(72) Erfinder: Brosowitsch, Josef, A-1170 WIEN (AT)

(57) **Zusammenfassung**

Dübel (1) für Mauerwerk, Beton, Stahlkonstruktionen usw. mit mehreren in Umfangsrichtung des Dübels versetzt angeordneten, abwechselnd von beiden Dübelenden ausgehenden Längsschlitzen (11',12',13') sowie einer Hohlbohrung (20) zur Aufnahme der Befestigungssschraube, wobei der Dübel (1) aus mindestens sechs Segmenten (2',3',4',5',6',7') besteht, welche im Bereich der beiden Stirnflächen paarweise elastisch miteinander verbunden sind, wobei die Dübelsegmente (2,3,4,5,6,7) zueinander eine ziehharmonikaförmig elastische Verbindung (17,18,19 bzw. 55 bis 66) aufweisen, wodurch erreicht wird, daß der Dübel (1) über seine gesamte Länge eine hohe radiale Verformbarkeit aufweist und die Befestigungsschraube in jeder radialen Belastungsrichtung über die Gesamtlänge des Dübels (1) anliegt.

## Beschreibung

Die Erfindung betrifft einen Dübel für Mauerwerk, Beton, Stahlkonstruktionen usw., mit mehreren in Längsrichtung angeordneten Schlitzen, sowie einer Hohlbohrung zur Aufnahme der Befestigungsschraube, wobei der Dübel aus mindestens sechs Segmenten besteht, welche im Bereich der beiden Stirnflächen paarweise elastisch miteinander verbunden sind, in der Form, daß die über den Dübelumfang verteilten, radial angeordneten Längsschlitze abwechselnd jeweils nur eine Stirnfläche durchsetzen, mit dem Ziel, daß der Dübel beim Einschrauben der Befestigungsschraube allseits, über die gesamte Dübellänge radial verformt wird und er somit für mehrere Durchmesserbereiche gleichermaßen geeignet ist.

Eine derartige Ausführung ist aus der CH-PS 493 749 bekannt, bei welcher die Hülsenwand mehrere Einschnitte aufweist, die in Umfangsrichtung der Hülse untereinander versetzt angeordnet sind und die von beiden Hülsenenden ausgehend sich über einen Großteil der Hülsenlänge erstrecken, sodaß die zwischen den Enden der Einschnitte und den Hülsenenden verbleibenden Wandteile und die zwischen den Einschnitten verbleibenden Wandstreifen für eine biegeelastische Verformung bei Ausdehnung der Hülsenwand in Umfangsrichtung ausgebildet sind. Der Nachteil dieser Ausführung ist jedoch, daß die Befestigungsschraube im Bereich des Spreizwinkels der Längsschlitze keine Dübelauflagefläche vorfindet und es daher zu unerwünschten Kippmomenten - je nach Position des Dübels - der Befestigungssschraube kommen kann. Zudem wird bei einer größeren Anzahl der Längssschlitze der Dübel relativ weich, bzw. sind dei einzelnen Segmente zueinander leichter verformbar, was besonders bei Beginn des Einschraubvorganges nachteilig sein könnte.

Um nun diese Nachteile zu verhindern, wird erfindungsgemäß vorgeschlagen, die Längsschlitze wenigstens im größten Öffnungsbereich - nämlich an den Stirnseiten - nicht durchgehend auszuführen, sondern elastische Verbindungselemente zu schaffen, welche ziehharmonikaförmig auseinanderziehbar sind und gleichzeitig eine federnde Wirkung aufweisen. Die elastischen Verbindungselemente entstehen durch entsprechende Gestaltung der Dübelspritzform und können sowohl in der zylindrischen Dübelmantelfläche integriert sein, als auch als radiale Dübelkostruktion ausgebildet sein. Damit wird erreicht, daß die erfindungsgemäßen Dübel, in bezug auf die Verformung der Segmente, relativ steif bleiben und dennoch eine radiale Federwirkung mit großem Federweg aufweisen.

Anhand von einigen zeichnerisch dargestellten Beispielen soll der erfindungsgemäße Dübel näher erlautert werden.

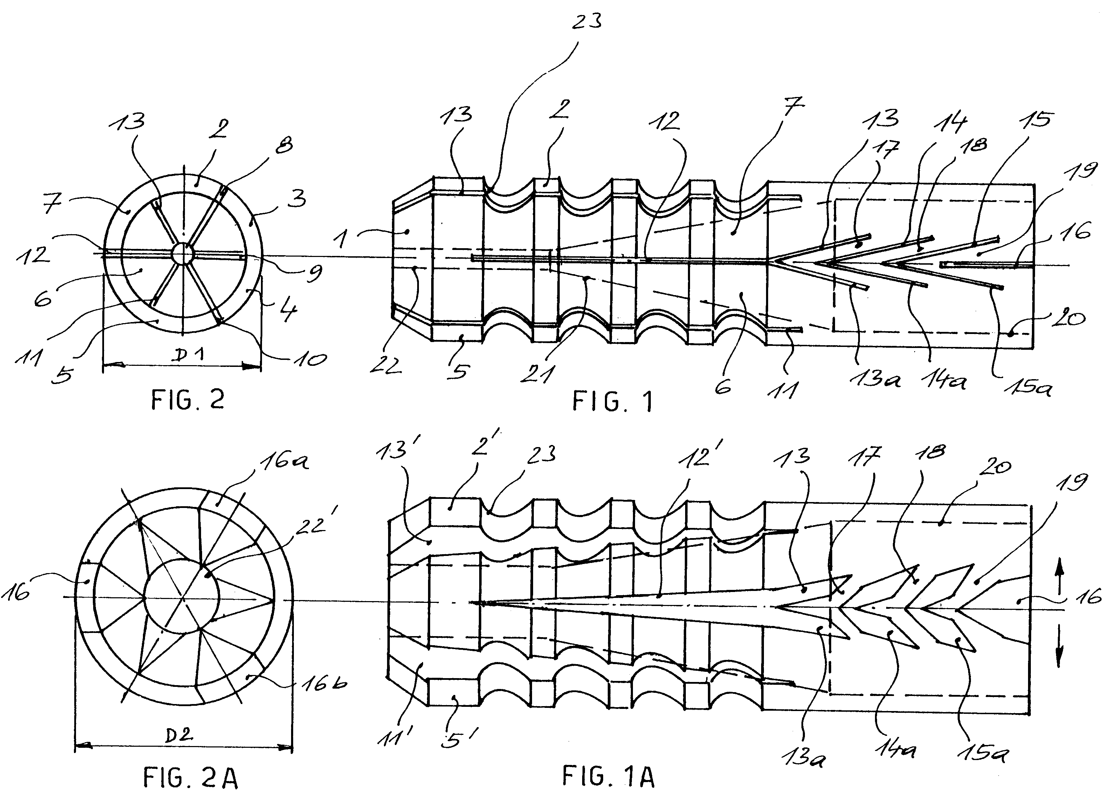

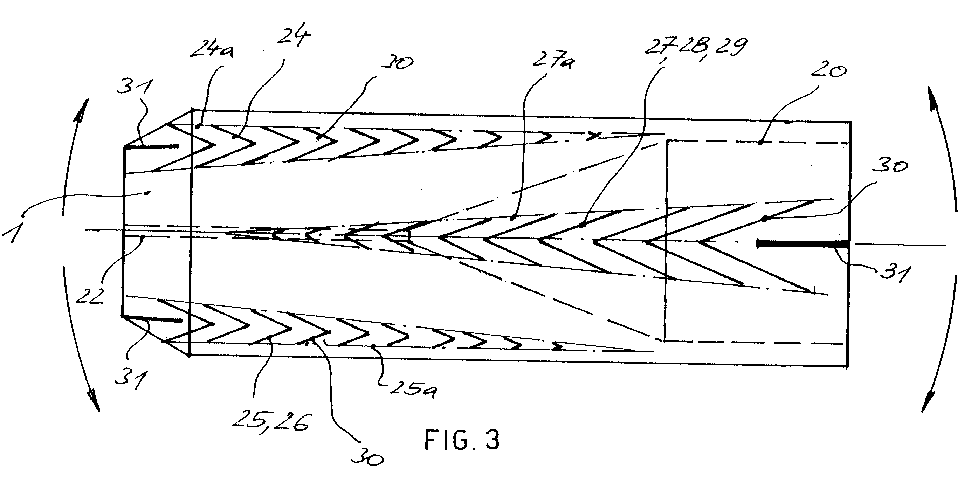

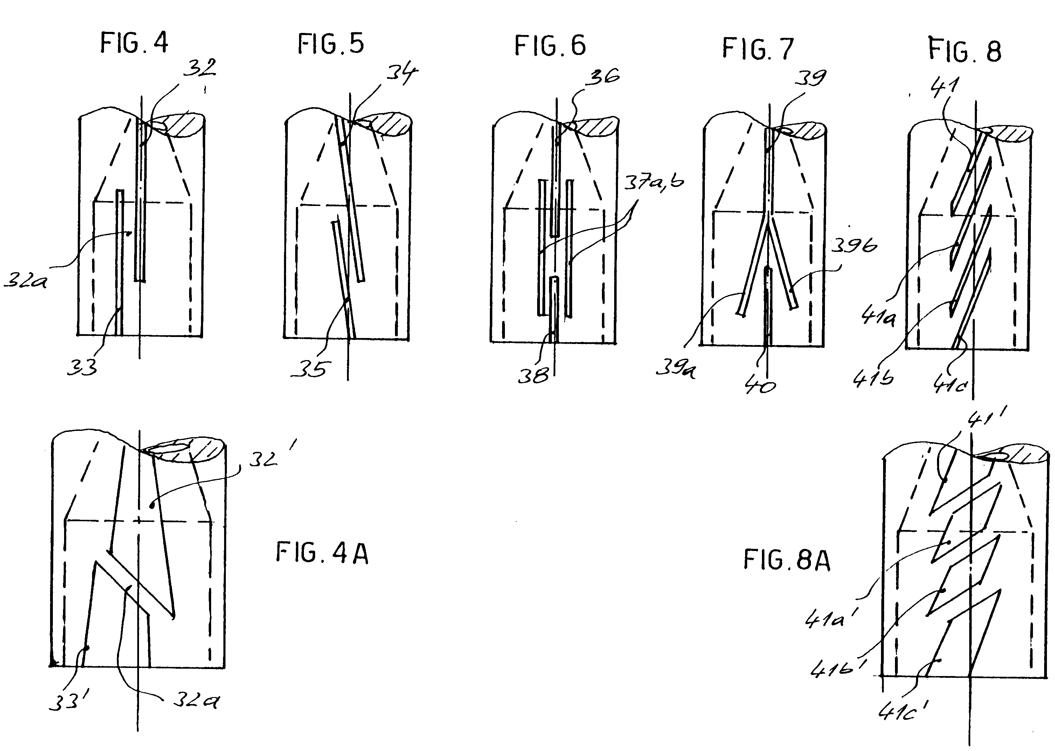

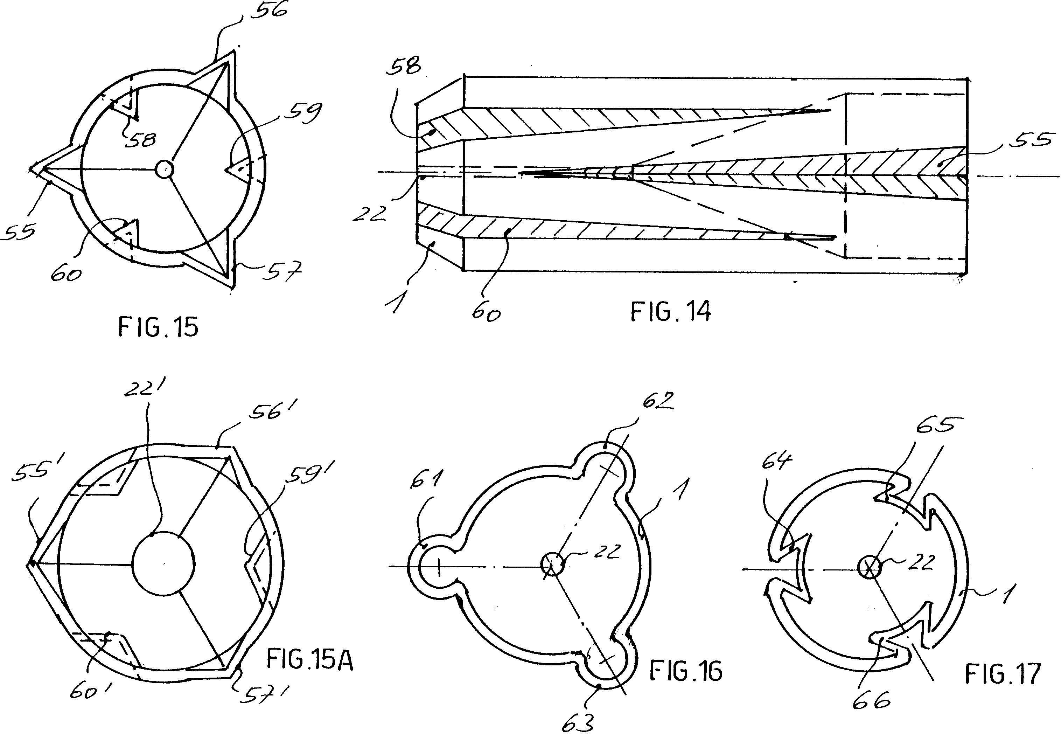

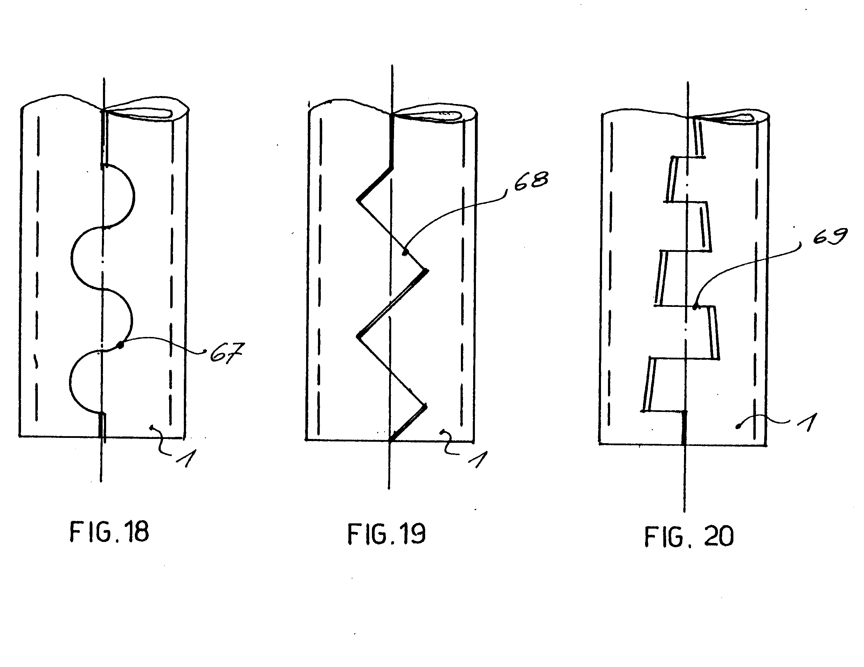

Fig. 1 und Fig. 2 zeigen einen Dübel in zusammengepreßtem Zustand, mit radialer Federwirkung; Fig. 1A und Fig. 2A den Dübel im Grundzustand. Fig. 3 zeigt einen Dübel mit über die gesamte Schlitzlänge angeordneten elastischen Verbindungselementen. Fig. 4 bis Fig. 13 zeigen verschiedene Varianten für die Ausbildung der elastischen Verbindungsstellen, welche am Dübelmantel vorgesehen sind. Die Fig. 14 bis Fig. 17 zeigen einige Ausbildungsmöglichkeiten von radialen Konstruktionen des zylindrischen Dübelkörpers. Die Fig. 18 bis Fig. 20 stellen Maßnahmen dar, um im Bereich des Öffnungswinkels der Segmente trotz Aufspreizung eine Dübelauflagefläche für den Befestigungsbolzen zu erhalten.

Wie in Fig. 1 und Fig. 2 ersichtlich, ist der Dübel -1- durch sechs Schlitze -8,9,10,11,12,13- in sechs Segmente -2-3-4-5-6-7- unterteilt. Die sechs Schlitze -8,9,10,11,12,13-, welche nach den bekannten Ausführungen je eine Stirnseite durchsetzen sind nach der erfindugsgemäßen Ausbildungsform an keiner Stirnseite durchgehend ausgebildet. Die Schlitze -8,10,12- erfahren eine Fortsetzung z.B. durch drei V-förmige Schlitze -13,13a, 14,14a,15,15a-, wodurch drei elastische Verbindungswinkel -17,18,19- entstehen, welche eine radiale Verformung des Dübels zulassen, ohne daß die sechs Segmente -2,3,4,5,6,7- an einer Seite voneinander getrennt sind. Die Fig. 1 und Fig. 2 zeigen den zusammengepreßten Dübel, welcher sich durch die Federwirkung radial in der Mauerbohrung optimal über seine gesamte Länge anpreßt. Aus der Spritzgußform kommt der Dübel günstigerweise wie in Fig.1 und Fig. 2 dargestellt und könnte unmittelbar danach, evtl. noch im plastischen Zustand aufgeweitet werden. Wie in Fig. 1 ferner erkennbar, sind die elastischen Verbindungselemente -17,18,19- beispielweise nur auf der Seite der zylindrischen Dübelbohrung -20- vorgesehen, sind aber auch an allen sechs oder mehr Schlitzen -je nach Ausführung - anbringbar. Der Dübel -1- weist eine Kernbohrung -22- auf. Der Dübeldurchmesser kann sich also von D2 auf D1 verringern, oder auch vergrößern, je nachdem, welche Schraube verwendet wird.

Fig. 3 zeigt eine Konstruktion, bei welcher über den gesamten Längenbereich der Verformung V-förmige Schlitze -30- vorgesehen sind, welche eine einhüllende Dreiecksfigur -24a,25a,27a- bilden, die Schlitze werden also in Richtung Ausgangspunkt immer kürzer. Damit wird eine besonders große Federwirkung erreicht, bei hoher Stabilität des Dübels. An den Stirnseiten genügt es kurze Schlitze -31- anzubringen.

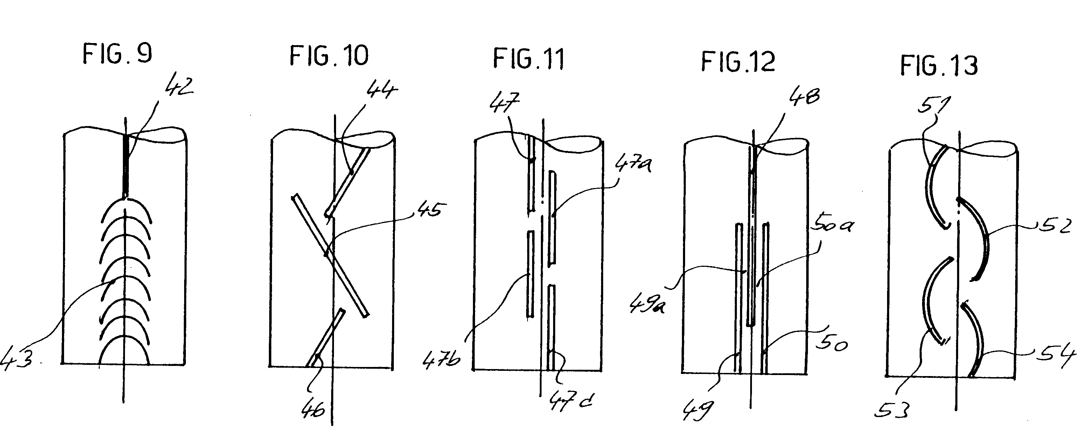

Die Fig. 4 bis Fig. 13 zeigen weitere Varianten von Schlitzformen, welche je nach Wunsch, Einsatzbereich und Dübelmaterial wählbar sind. Fig. 4A zeigt die gedehnte Form bzw. den Grundzustand von Fig. 4, ebenso wie Fig. 8A von Fig. 8. Die elastischen Verbindungsstege z.B. -32a- ändern dabei ihre Winkelstellung. Die Schlitze 43- nach Fig. 9 können auch durch schräges Anschneiden des Dübelmantels erzeugt werden. Fig. 14 bis Fig. 17 zeigen radiale Verformungskonstruktionen, welche außer- od. innerhalb des Dübelmantels liegen können. Wie in Fig. 15 erkennbar, werden die pyramidenförmigen Ansätze -55,56,57- beim Zusammenfedern spitz und tragen so auch zu einem besseren Halt in der Mauerbohrung bei. Diese biegsamen Konstruktionen des Dübelkörpers -1- können bei ein und demselben Dübel innen als auch außen vorgesehen sein und die verschiedensten Formen, z.B. auch kegelförmig -61,62,63- aufweisen. Fig. 15A zeigt den Dübel im gedehnten Zustand. Die Fig. 18 bis Fig. 20 stellen weitere Möglichkeiten dar, im Bereich der Längsschlitze, dort wo keine elastische Verbindung vorhanden ist, eine Materialüberdeckung des Dübelkörpers -1- mit Hilfe geschwungener, schräger od. stufenförmiger Schlitze -67,68,69- zu erzielen, um somit eine Auflage des Befestigungsbolzens über dessen gesamte Länge zu gewährleisten.

## Patentansprüche

1. Dübel für Mauerwerk, Beton, Stahlkonstruktionen usw. mit mehreren in Umfangsrichtung des Dübels versetzt angeordneten, abwechselnd von beiden Dübelenden ausgehenden Längsschlitzen, sowie einer Hohlbohrung zur Aufnahme der Befestigungsschraube, wobei der Dübel aus mindestens sechs Segmenten besteht, welche im Bereich der beiden Stirnflächen paarweise elastisch miteinander verbunden sind, **dadurch** **gekennzeichnet**, daß die Dübelsegmente (2,3,4,5,6,7) im Bereich der Schlitze (8,9,10,11,12,13) eine ziehharmonikaförmig elastische Verbindung (17,18,19 bzw. 55 bis 66) aufweisen, durch entsprechende Übergänge bzw. Ausnehmungen (13,14,15) im Bereich zwischen je zwei Dübelsegmenten (2,3,4,5,6,7), wobei diese Ausgestaltungen im Dübelmantel des Dübels (1) integriert sind oder eine radiale Ausbildungsform der elastischen Verbindungselemente (56 bis 66) vorgesehen ist.

2. Dübel nach Anspruch 1, dadurch gekennzeichnet, daß über den gesamten theoretischen Schlitzbereich (24a,25a,27a) V-förmige, sich verjüngende Schlitze (30) vorgesehen sind.
(Fig. 3)

3. Dübel nach Anspruch 1, dadurch gekennzeichnet, daß die Längsschlitze (8,9,10,11,12,13) als eine Anordnung von mehreren kurzen Schlitzen (32 bis 41) ausgebildet sind, welche insbesondere an den Stirnbereichen des Dübels (1) vorgesehen sind.
(Fig. 4 bis Fig. 8)

4. Dübel nach Anspruch 1, dadurch gekennzeichnet, daß die radial angeordneten elastischen Verbindungselemente (56,62,65) pyramiden - oder kegelförmig ausgebildet sind und im wesentlichen die gleich Wandstärke wie der Dübelmantel des Dübels (1) aufweisen.
(Fig. 15 bis Fig. 17)
